# EUROPÄISCHE PATENTSCHRIFT

(11) **EP 0 958 724 B1**
(45) Veröffentlichungstag und Bekanntmachung des Hinweises auf die Patenterteilung: **03.07.2002**
(21) Anmeldenummer: 99108454.2
(22) Anmeldetag: 30.04.1999
(51) Int. Cl.: A01C 15/00, A01C 17/00

(54) **Düngerstreuer**
Fertiliser spreader
Epandeur d'engrais

(30) Priorität: 13.05.1998 DE 19821332
(43) Veröffentlichungstag der Anmeldung: 24.11.1999
(73) Patentinhaber: Amazonen-Werke H. Dreyer GmbH & Co. KG, 49205 Hasbergen (DE)
(72) Erfinder: Higgen, Reinhard Dipl.-Ing., 27798 Hude (DE); Schmidt, Richard, 27798 Hude (DE)

(56) Entgegenhaltungen:
- DE-A- 4 408 016
- DE-A- 19 520 452
- US-A- 4 405 089

## Beschreibung

Die Erfindung betrifft einen Düngerstreuer gemäß des Oberbegriffes des Patentanspruches 1.

Ein derartiger Düngerstreuer ist in der DE-OS 195 20 452 beschrieben. Dieser Düngerstreuer hat sich inzwischen in der Praxis bewährt. Vorteilhaft ist bei diesem Düngerstreuer, daß die Auslauföffnung in zwei Teilbereiche aufteilbar ist, so daß durch Schließen der einen Auslauföffnung mittels eines Schiebers die Arbeitsbreite halbseitig reduziert werden kann.

Nachteilig ist jedoch bei dem bekannten Schleuderstreuer, daß kleine Ausbringmengen nicht exakt genug eingestellt werden können.

Der Erfindung liegt die Aufgabe zugrunde, mit einfachen Maßnahmen den bekannten Schleuderstreuer insbesondere im Hinblick auf das Einstellen von kleinen und großen Ausbringmengen wesentlich zu verbessern.

Diese Aufgabe wird erfindungsgemäß durch die kennzeichnenden Merkmale des Patentanspruches 1 gelöst. Infolge dieser Maßnahmen wird auf überraschend einfacher Weise es möglich, sowohl große Ausbringmengen wie auch kleine Ausbringmengen genau einzustellen.

Eine einfache Einstellung des kleineren Schiebers läßt sich dadurch erreichen, daß an dem kleineren Schieber ein Einstellelement zur Verstellung zumindest des kleineren Schiebers angeordnet ist.

Um sicherzustellen, daß bei der Verstellung des kleineren Schiebers der erste Schieber nicht verstellt wird, ist vorgesehen, daß der erste Schieber mittels eines Festsetzelementes in eine untere Stellung am Vorratsbehälter festsetzbar ist.

Um mit dem gleichen Einstellelement, mittels welchem der kleinere Schieber verstellbar ist, auch den großen Schieber verstellen zu können, wenn größere Ausbringmengen ausgebracht werden sollen, ist vorgesehen, daß der kleinere Schieber in seiner unteren Stellung durch Verriegelungselemente mit dem ersten Schieber verriegelbar ist, und daß in der verriegelten Position der kleinere Schieber mit dem ersten Schieber bewegbar und so die erste Austrittsöffnung einstellbar ist.

Weitere Einzelheiten der Erfindung sind der Beispielsbeschreibung und den Zeichnungen zu entnehmen. Hierbei zeigen
- Fig.1: den Großflächendüngerstreuer in der Ansicht von hinten und in Prinzipdarstellung,
- Fig.2: den Düngerstreuer in der Ansicht von hinten und in Prinzipdarstellung, mit einer anderen Einstellung des Schiebers und
- Fig.3: den Düngerstreuer in der Ansicht von hinten, wobei eine weitere Einstellung des Schiebers gezeigt ist.

Der Großflächendüngerstreuer ist mit einem Vorratsbehälter 1, einem Rahmen 2 und einem Fahrwerk 3 ausgestattet. In dem unteren Bereich des langgestreckten Vorratsbehälters 1 befindet sich das antreibbare und als Förderband 4 ausgebildete Förderorgan. In dem hinteren Bereich des Vorratsbehälters 1 ist die Austrittsöffnung 5 angeordnet. Diese Austrittsöffnung 5 ist durch die mittleren Führungsstege 6 für die Schieber 7 und 8 in zwei Austrittshälften aufgeteilt, welche jeweils eine erste Auslauföffnung 9 und 10 bilden. Diese Auslauföffnungen 9 bzw. 10 ist jeweils über einen ersten Schieber 7 bzw. 8 in ihrem Austrittsquerschnitt einstellbar. In dem ersten Schieber 7 bzw. 8 ist eine kleinere Auslauföffnung 11 bzw. 12, welche über den weiteren Schieber 13 bzw. 14 abdeckbar bzw. einstellbar ist.

Das Förderband 4 wird von der Schlepperzapfwelle über eine Antriebswelle angetrieben. Über das Förderband 4 wird das Material durch die Auslauföffnungen 9, 10 bzw. 11,12 den als Scheibenstreuwerk 15 ausgebildeten Streuorganen über die Leitelemente 16 zugeordnet.

Zwischen dem jeweils weiteren Schieber 13, 14 und dem am Rahmen 2 angeordneten Steg 17 ist ein als Hydraulikzylinder ausgebildetes Einstellelement 18, 18' angeordnet. Dieses Einstellelement 18, 18' kann auch als elektrischer Stellmotor etc. ausgebildet sein.

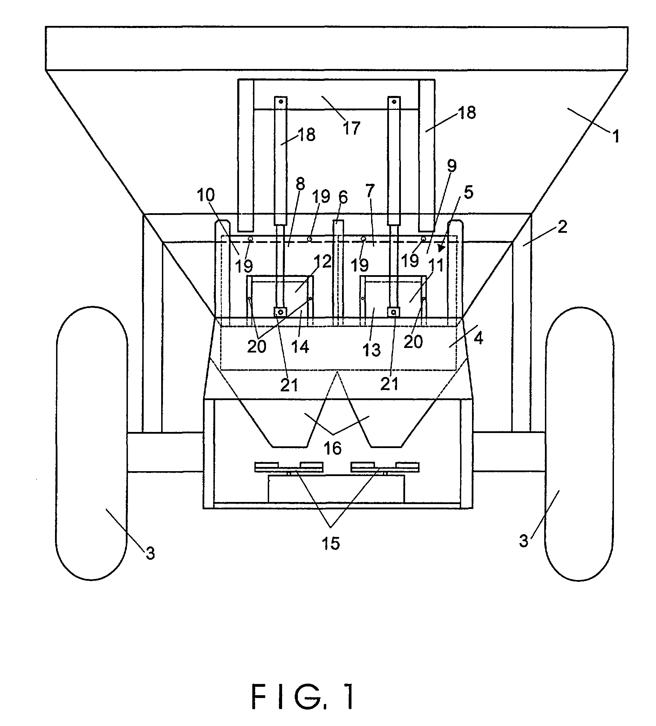

In der in Fig.1 dargestellten Stellung befinden sich die ersten Schieber 7 und 8 und die weiteren Schieber 13 und 14 jeweils in ihrer unteren Stellung, so daß sie mit ihrer unteren Kante an dem Förderband 4 zur Anlage kommen und so die Auslaufbzw. Austrittsöffnungen 5, 9, 10, 11, 12 vollständig abdecken, so daß kein Material ausgebracht wird.

Wenn kleinere Ausbringmengen ausgebracht werden sollen, werden die ersten Schieber 7 und 8 mittels der Festsetzelemente 19, die als Schraubbolzen oder Steckbolzen ausgebildet sein können, in der untersten Stellung am Vorratsbehälter 1 festgesetzt. Die Verriegelungselemente 20 zwischen dem ersten Schieber 7, 8 und dem weiteren Schieber 13, 14 sind gelöst, so daß über die Einstellelemente 18, 18' die weiteren Schieber 13, 14 gegenüber dem Vorratsbehälter 1 bzw. den ersten Schiebern 7, 8 verstellbar sind, so daß die kleineren Austrittsöffnungen 11, 12 in ihrem Durchlaßquerschnitt einstellbar ist.

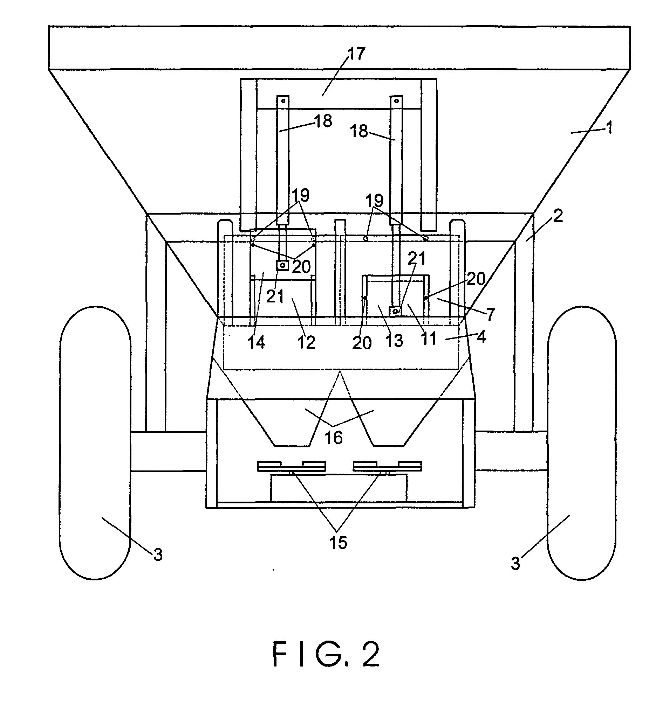

In Fig.2 ist auf der linken Seite der weitere Schieber 14 in seiner größtmöglichen Öffnungsstellung dargestellt, so daß die größtmögliche kleinere Materialmenge aus der Auslauföffnung 12 durch das Förderband 4 ausgebracht wird. Der rechte Schieber 13 ist in seiner unteren Stellung dargestellt. Die Einstellelemente 18, 18' sind unabhängig voneinander betätigbar, so daß die Schieber 13, 14 in unterschiedlichen Einstellungen jedoch auch in gleichen Einstellungen eingestellt werden können, so daß entsprechend den Einsatzbedingung der jeweiligen Schleuderscheibe des Streuorgans 15 die gleiche Menge oder jedoch auch den Schleuderscheiben jeweils unterschiedliche Mengen Material zuführbar sind.

Wenn größere Materialmengen ausgebracht werden sollen, werden die weiteren Schieber 13, 14 in ihrer untersten Stellung mittels der Verriegelungselemente 20 an den ersten Schiebern 7, 8 festgesetzt, so daß die unteren Kanten der weiteren Schieber 13, 14 und der ersten Schieber 7, 8 auf gleicher Höhe liegen, so daß die in den ersten Schiebern 7, 8 angeordneten Auslauföffnungen 11, 12 vollständig abgedeckt ist. Desweiteren werden die Festsetzelemente 19, mittels welcher die ersten Schieber 7, 8 an dem Vorratsbehälter 1 in ihrer unteren Stellung festlegbar sind, gelöst bzw. entfernt, so daß dann über die Einstellelemente 18, 18' der jeweilige erste Schieber 7, 8 verstellt werden kann.

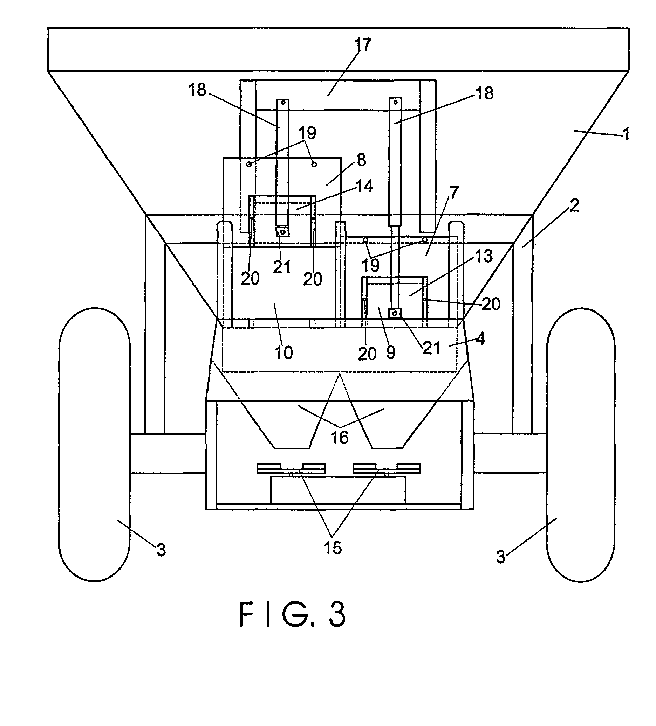

In Fig.3 ist die oberste Stellung des linken Schiebers 8 dargestellt.

Wie bereits bei der Beschreibung zu den kleineren Schiebern 13, 14 erwähnt, können über die Einstellelemente 18, 18' die Schieber 7, 8 in gleicher Weise, jedoch auch unabhängig voneinander eingestellt werden, so daß entsprechend den Einsatzbedingungen den Schleuderscheiben des Streuorgans 15 jeweils die gleiche Menge, oder unterschiedliche Materialmengen zuführbar sind.

Durch die Verriegelung mittels der Verriegelungselemente 20 der weiteren Schieber 13, 14 an den ersten Schiebern 7, 8 sind somit auch die ersten Schieber 7, 8 mittels der Einstellelemente 18, 18', die an den kleineren Schiebern 13, 14 mittels der Halterungen 21 angelenkt sind, verstellbar.

## Patentansprüche

1. Düngerstreuer, insbesondere zum Ausbringen von körnigen und/oder pulverigen Material, mit einem Rahmen, einem Fahrwerk und einem auf dem Rahmen befestigten Vorratsbehälter und zumindest einem Streuorgan zum Verteilen des Materials und einem Transportband zum Materialfördern zu dem Streuorgan, welches vorzugsweise zwei um aufrechte Achsen rotierende und mit Wurfschaufeln besetzte Schleuderscheibe aufweist, wobei der Vorratsbehälter als langgestreckter Behälter ausgebildet ist und im unteren Bereich des Vorratsbehälters ein über Umlenkrollen geführtes, umlaufendes und sich zumindest annähernd über die gesamte untere Breite des Vorratsbehälters erstreckendes Transportband angeordnet ist, wobei auf der in Förderrichtung zugewandten Vorratsbehälterwand sich zwei über jeweils zumindest einen ersten Schieber einstellbare erste Auslauföffnungen befinden, **dadurch gekennzeichnet, daß** in jedem ersten Schieber (7, 8) eine kleinere Auslauföffnung (11, 12) als die über den ersten Schieber (7, 8) einstellbare erste Auslauföffnung (9, 10) angeordnet ist, daß dieser kleineren Auslauföffnung (11, 12) in dem ersten Schieber (7, 8) ein weiterer Schieber (13, 14) zugeordnet ist.

2. Düngerstreuer nach Anspruch 1, **dadurch gekennzeichnet, daß** an dem kleineren Schieber (13, 14) ein Einstellelement (18, 18') zur Verstellung zumindest des kleineren Schiebers (13, 14) angeordnet ist.

3. Düngerstreuer nach einem oder mehreren der vorstehenden Ansprüche, **dadurch gekennzeichnet, daß** der erste Schieber (7, 8) mittels eines Festsetzelementes (19) in einer unteren Stellung am Vorratsbehälter (1) festsetzbar ist.

4. Düngerstreuer nach einem oder mehreren der vorstehenden Ansprüche, **dadurch gekennzeichnet, daß** der kleinere Schieber (13, 14) in seiner unteren Stellung durch Verriegelungselemente (20) mit dem ersten Schieber (7, 8) verriegelbar ist, und daß in der verriegelten Position der kleinere Schieber (13, 14) mit dem ersten Schieber (7, 8) bewegbar und so die erste Austrittsöffnung (9, 10) einstellbar ist.

## Claims

1. Fertiliser broadcaster, more especially for distributing granular and/or powdery material, having a frame, a framework and a hopper, which is secured on the frame, and having at least one broadcasting member for distributing the material and one conveyor belt for conveying the material to the broadcasting member, which preferably has at least two centrifugal discs, which rotate around perpendicular axes and are equipped with throwing vanes, the hopper being configured as an elongated container and a circulating conveyor belt, guided by guide rollers and extending at least approximately over the entire lower width of the hopper, being disposed in the lower region of the hopper, two first discharge apertures, which are adjustable in each case via at least one first slide, being situated on the wall of the hopper facing in the direction of conveyance, **characterised in that** the discharge aperture (11, 12) disposed in each first slide (7, 8), is smaller than the first discharge aperture (9, 10) which is adjustable via the first slide (7, 8), and **in that** another slide (13, 14) is assigned to this smaller discharge aperture (11, 12) in the first slide (7, 8).

2. Fertiliser broadcaster in accordance with claim 1, **characterised in that** an adjusting member (18, 18') is disposed on the smaller slide (13, 14) for adjusting at least the smaller slide (13,14).

3. Fertiliser broadcaster in accordance with one or more of the preceding claims, **characterised in that** the first slide (7, 8) can be fixedly secured in a lower position on the hopper (1) through the intermediary of a fixing member (19).

4. Fertiliser broadcaster in accordance with one or more of the preceding claims, **characterised in that**, in its lower position, the smaller slide (13,14) can be locked to the first slide (7, 8) through locking members (20), and **in that**, in the locked position, the smaller slide (13,14) can be displaced with the first slide (7, 8) and the first discharge aperture (9, 10) is thereby adjustable.

## Revendications

1. Epandeur d'engrais notamment pour distribuer des produits en forme de grains et/ou de poudre, comprenant un cadre, un équipement de roulage et un réservoir d'alimentation fixé sur le cadre ainsi qu'au moins un organe d'épandage pour distribuer les produits et une bande transporteuse pour transporter des produits vers l'organe d'épandage, cet organe se composant de préférence de deux disques d'épandage tournant autour d'axes montants et garnis de palettes d'éjection, le réservoir d'alimentation étant réalisé sous la forme d'un réservoir allongé dont le fond comporte une bande transporteuse guidée et tournant sur des galets de renvoi, qui s'étend au moins sensiblement sur toute la largeur du réservoir, et la paroi du réservoir tournée dans le sens du transfert, comportant deux premiers orifices de sortie, réglables par au moins un premier tiroir,
**caractérisé en ce que**
dans chaque premier tiroir (7, 8) il est prévu un orifice de sortie (11, 12) plus petit que le premier orifice de sortie (9, 10) réglable par le premier tiroir (7, 8), et un autre tiroir (13, 14) est associé à ce petit orifice de sortie (11, 12) dans le premier tiroir (7, 8).

2. Epandeur d'engrais selon la revendication 1,
**caractérisé en ce qu'**
un élément de réglage (18, 18') est prévu sur le petit tiroir (13, 14) pour régler au moins ce petit tiroir (13, 14).

3. Epandeur d'engrais selon une ou plusieurs des revendications précédentes,
**caractérisé en ce que**
le premier tiroir (7, 8) se fixe à l'aide d'un élément de fixation (19) dans une position inférieure du réservoir (1).

4. Epandeur d'engrais selon l'une ou plusieurs des revendications précédentes,
**caractérisé en ce que**
le petit tiroir (13, 14) est verrouillable dans sa position inférieure par des éléments de verrouillage (20) au premier tiroir (7, 8) et
dans la position verrouillée, le petit tiroir (13, 14) est mobile avec le premier tiroir (7, 8) et règle ainsi le premier orifice de sortie (9, 10).
